## Europäisches Patentamt
## European Patent Office
## Office européen des brevets

(19)

(11) Veröffentlichungsnummer: **0 218 267
B1**

(12) **EUROPÄISCHE PATENTSCHRIFT**

(45) Veröffentlichungstag der Patentschrift:
22.08.90

(51) Int. Cl.⁵: **H02M 3/156**

(21) Anmeldenummer: 86201068.3

(22) Anmeldetag: 19.06.86

(54) Verfahren zur Steuerung eines schaltgeregelten Energiewandlers (boost converter).

(30) Priorität: 19.08.85 CH 3564/85

(43) Veröffentlichungstag der Anmeldung:
15.04.87 Patentblatt 87/16

(45) Bekanntmachung des Hinweises auf die Patenterteilung:
22.08.90 Patentblatt 90/34

(84) Benannte Vertragsstaaten:
CH DE FR GB LI NL SE

(56) Entgegenhaltungen:
EP-A- 0 078 722
WO-A-81/03103
DE-B- 2 801 391

(73) Patentinhaber: Ascom Hasler AG, Belpstrasse 23,
CH-3000 Bern 14(CH)

(72) Erfinder: Kislowski, André, Wylerringstrasse 1,
CH-3014 Bern(CH)

(74) Vertreter: Schwerdtel, Eberhard, Dr., Ascom Tech AG
Abteilung KTMR Belpstrasse 23 Postfach,
CH-3000 Bern 14(CH)

ACTORUM AG

**Beschreibung**

Die Erfindung betrifft ein Verfahren zur Steuerung eines schaltgeregelten Energiewandlers (boost converters) entsprechend dem Oberbegriff von Anspruch 1.

Schaltgeregelte Energiewandler, bevorzugt als Wandler zur Erzeugung einer Gleichspannungsenergie aus einem Wechselspannungsnetz, sind allgemein bekannt. Als Schrift, die einen solchen Wandler beschreibt, wird beispielsweise die Europäische Patentschrift 50 132 genannt.

Die schaltgeregelten Energiewandler weisen einen Gleichrichter auf zur Gleichrichtung der speisenden Wechselspannung, eine Ladedrossel, eine Ladediode, einen Speicherkondensator und einen elektronischen Schalter, z.B. einen Schalttransistor. Dieser Schalttransistor wird in Art eines Zweipunktreglers eingeschaltet, sobald ein Sollwert den jeweiligen Istwert überschreitet, und umgekehrt ausgeschaltet, sobald der Istwert den Sollwert überschreitet.

Die schaltgeregelten Energiewandler arbeiten damit nach einem einfachen Prinzip und besitzen wegen des frei oszillierenden Reglers gute dynamische Eigenschaften.

Als Sollwert des Reglers entsprechend der zitierten Schrift dient eine ungeglättete, gleichgerichtete Spannung, als Istwert der zeitlich verzögerte Strom durch den elektronischen Schalter. Hierdurch hat der aus dem Netz gezogene Strom im Mittel einen sinusförmigen Verlauf.

Aus der Schrift DE-B 2 801 391 ist ein weiterer Energiewandler der genannten Art bekannt. Dieser Wandler weist einen Komparator auf, der mit einer konstant eingestellten Schalthysterese der sinusförmigen Eingangsspannung und der etwa konstanten Ausgangsspannung folgt. Im Bereich der Amplituden-Maxima der Eingangsspannung entspricht die Belastung damit etwa dem jeweiligen Spannungswert des speisenden Wechselspannungsnetzes. Im Bereich der jeweiligen Amplituden-Minima und/oder bei geringer Ausgangsleistung ergeben sich dagegen ganz erhebliche Abweichungen vom sinusförmigen Verlauf, die als Störungen des Wechselspannungsnetzes registrierbar sind.

Es ist daher die Aufgabe der vorliegenden Erfindung, ein verbessertes Verfahren zur Steuerung eines Energiewandlers der genannten Art anzugeben, bei dem unabhängig vom jeweiligen Verbrauch das speisende Netz ständig weitgehend sinusförmig belastet wird.

Die Lösung dieser Aufgabe ist gegeben durch den kennzeichnenden Teil von Anspruch 1. Die anderen Ansprüche geben Ausgestaltungen der Erfindung an.

Im folgenden wird die Erfindung anhand von zwei Figuren beispielsweise näher beschrieben.

Es zeigen:

Fig. 1 Blockschaltbild eines Energiewandlers
Fig. 2 Zeitdiagramme.

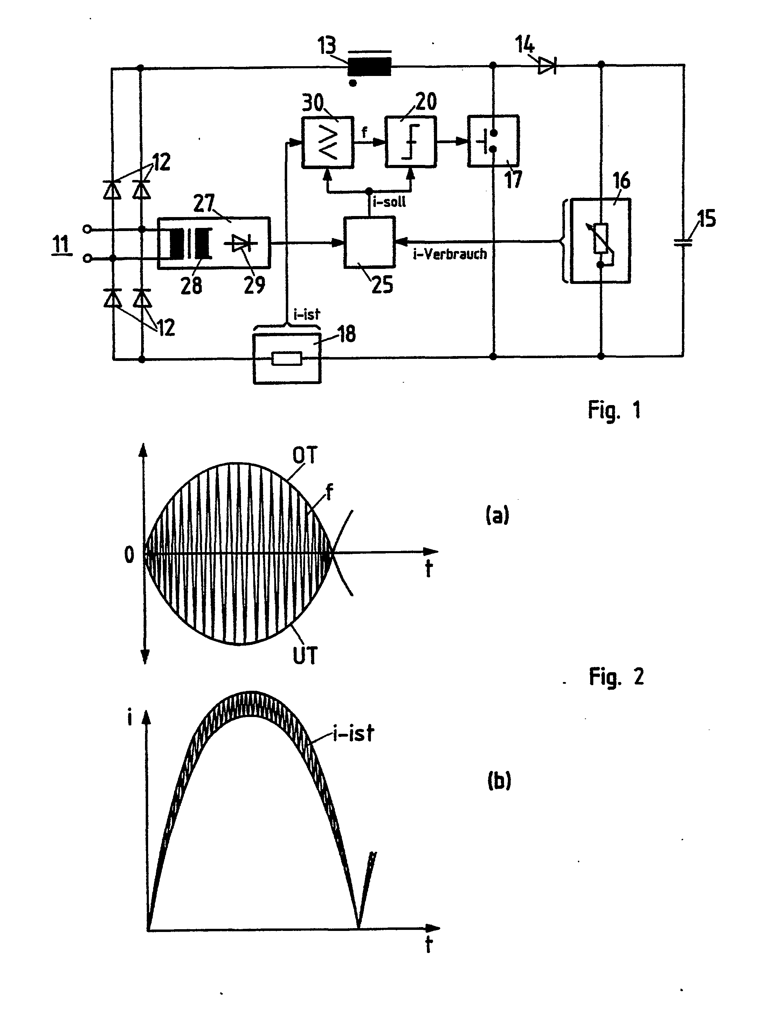

Figur 1 zeigt einen schaltgeregelten Energiewandler mit folgenden, an sich und in ihrer Zusammenschaltung sowie deren Funktionsweise bekannten Einheiten: einen an das Netz angeschlossenen Zweiweggleichrichter aus vier Dioden 12, eine Ladedrossel 13, eine Ladediode 14, einen Speicherkondensator 15, einen Verbraucher 16 (dargestellt als variabler Widerstand), einen elektronischen Schalter, z.B. einen Schalttransistor 17 (dargestellt als Schalter) und einen Meßwiderstand 18 zur Bestimmung des vom Energiewandler laufend absorbierten Stromes.

Der Schalttransistor 17 wird durch einen Regler 20 durchgeschaltet, sobald eine obere Triggerschwelle OT im Regler überschritten wird und gesperrt, sobald eine untere Triggerschwelle UT unterschritten wird. Im durchgeschalteten Zustand des Schalttransistors 17 lädt sich die Ladedrossel 13 auf, im gesperrten Zustand entlädt sie sich über die Ladediode 14, wobei der Speicherkondensator 15 aufgeladen wird. Die Entladung des Speicherkondensators 15 erfolgt über den Verbraucher 16.

Die Steuerung dieses bekannten Wandlers wird im folgenden beschrieben. Vom Verbraucher 16 wird eine den jeweiligen, laufenden Verbrauch charakterisierende Messgrösse i-Verbrauch abgegriffen. Dies kann die Spannung am Verbraucher 16, der Strom durch diesen Verbraucher, die Leistung oder auch eine Temperatur sein, wenn der Verbraucher 16 beispielsweise ein Elektroofen ist.

Diese Messgrösse i-Verbrauch wird einem Modulator 25 zugeführt, der die Messgrösse i-Verbrauch mit einer Modulationsspannung U moduliert, die den zeitlichen Verlauf einer gleichgerichteten, nicht geglätteten Netzspannung aufweist und über einen Abgreifer 27 vom Netz 11 abgegriffen wird. Der Abgreifer 27 kann (wie dargestellt) beispielsweise als Transformator 28 mit nachgeschaltetem Gleichrichter 29 ausgebildet sein.

Die modulierte Messgrösse i-Verbrauch bildet eine Sollgrösse i-soll, die zum einen mit der vom Messwiderstand 18 abgeleiteten Messgrösse i-ist in einem Vergleicher 30 verglichen wird, wobei laufend ein Fehlersignal f abgegeben wird, das in geeigneter Weise, z.B. proportional, abhängig ist von der Abweichung der beiden Grössen i-ist und i-soll.

Im Regler 20 wird das Fehlersignal f mit den Triggerschwellen OT und UT verglichen. Sobald es die Schwelle OT überschreitet bzw. die Schwelle UT unterschreitet, spricht der Regler 20 an und öffnet bzw. schliesst den Schalter 17.

Die Sollgrösse i-soll wird zum anderen dem Regler 20 zugeführt, wo sie den Wert bzw. die Wertdifferenz der Triggerschwellen OT und UT regelt. Die Sollgrösse i-soll beeinflusst damit die sogenannte Schalthysterese des Reglers 20 derart, dass diese bei kleinen Werten von i-soll klein und bei grossen Werten gross ist. Damit ergibt sich eine adaptive Gesamtregelung in Abhängigkeit vom Verbrauch des Verbrauchers 16. Dies bedeutet, dass das Netz 11 unabhängig vom Verbrauch stets sinusförmig belastet wird. Der Energiewandler wirkt damit gegenüber dem Netz 11 stets wie ein ohmscher Widerstand.

Fig. 2 zeigt im Diagramm a den zeitlichen Verlauf der Werte der oberen OT und der unteren Triggerschwelle UT. Diese Werte schwanken entsprechend der Sollgrösse i-soll symmetrisch um einen mittleren Wert O, d.h. im Takt des Netzes 11 entsprechend einem gleichgerichteten Sinus von z.B. 50 Hz.

Fig. 2a zeigt weiter das Fehlersignal f, d.h. die Abweichung zwischen i-ist und i-soll. Sobald das Fehlersignal f den jeweiligen Wert von OT oder UT erreicht, schaltet der Schalter 17 und der Zeitgradient der Messgrösse i-ist ändert seine Richtung, so dass sich für f ein zickzackförmiger Verlauf zwischen OT und UT ergibt mit bis zu $10^5$ Wechseln pro Sinus-Halbwelle.

Fig. 2 zeigt im Diagramm b den zeitlichen Verlauf des dem Netz 11 entzogenen Stromes i-ist. Dieser Strom i-ist schwankt um den jeweiligen Verlauf von i-soll. Dabei sind die jeweiligen Abweichungen zwischen den Grössen i-ist und i-soll, d.h. die absoluten Fehlersignale f, abhängig vom jeweiligen Wert i-soll. Die relativen Fehlersignale f/i-soll sind dagegen konstant, dies als Wirkung der Regelung der Werte der Triggerschwellen OT und UT.

Damit belastet der vom Energiewandler absorbierte Strom i-ist das Netz 11 gesamthaft wie gewünscht stets sinusförmig. Dies verhindert Verzerrungen auf den Leitungen des Netzes 11. Das "Geräusch" durch das Ein- und Ausschalten des Schalters 17 ist bei jedem Verbrauch, relativ gesehen, konstant.

Ist das Netz 11 dagegen bereits verzerrt, dann erfolgt die Modulation der Messgrösse i-Verbrauch mit einer entsprechend verzerrten Modulationsspannung U, so dass als Folge das Netz 11 so belastet wird, dass keine zusätzliche Verzerrung auftritt.

Für die Grösse i-Verbrauch, für das Fehlersignal f und für die Abhängigkeit der Triggerschwellen OT und UT von der Sollgrösse i-soll ist es vorteilhaft, wenn die Beziehungen zu den jeweiligen Beziehungsgrössen proportional sind bzw. wenn lineare Abhängigkeiten bestehen. Dies ist jedoch keine grundsätzliche Forderung. Vielmehr ist es ohne weiteres auch möglich, von der Linearität abweichende Beziehungen zu verwenden, um Verstärkungen oder Dämpfungen von Nebeneffekten zu erreichen oder um einfachere und damit billigere Bauelemente verwenden zu können.

Der spezielle Aufbau der Einheiten Modulator 25, Vergleicher 30, Regler 20 und die Art und Weise, in der die Messgrössen i-ist und i-Verbrauch gewonnen werden, ist an sich bekannt und liegt im Ermessen des Fachmannes. Ein Eingehen hierauf erübrigt sich daher.

## Patentansprüche

1. Verfahren zur Steuerung eines schaltgeregelten Energiewandlers (boost converter) mit Speicherkondensator (15), Ladediode (14), Gleichrichter (12), Ladedrossel (13) und elektronischem Schalter (17) zur möglichst genauen sinusförmigen Belastung eines speisenden Wechselspannungsnetzes (11), wobei der Schalttransistor (17) in Art eines Zweipunktreglers jeweils bei Erreichen eines oberen Triggerwertes (OT) eingeschaltet und bei Unterschreiten eines unteren Triggerwertes (UT) ausgeschaltet wird, wobei das Erreichen und Unterschreiten der Triggerwerte (OT, UT) durch laufenden Vergleich eines Istwertsignals (i-ist) mit einem Sollwertsignal (i-soll) ermittelt wird, wobei als Istwertsignal (i-ist) ein Signal dient, das dem durch den Energiewandler absorbierten Strom proportional ist, wobei als Sollwertsignal (i-soll) ein Signal dient, das durch Gleichrichtung eines sinusförmigen Signals gewonnen wird, wobei an den Speicherkondensator (15) ein Verbraucher (16) angeschlossen ist, von dem eine Messgrösse (i-Verbrauch) abgeleitet wird, die dessem jeweiligen Verbrauch entspricht, dadurch gekennzeichnet,

  – dass das Sollwertsignal (i-soll) durch Modulation der Messgrösse (i-Verbrauch) mit der gleichgerichteten, nicht geglätteten Spannung des Wechselspannungsnetzes (11) gewonnen wird, und
  – dass die Grösse des oberen (OT) und des unteren Triggerwertes (UT) durch die Messgrösse (i-Verbrauch) so gesteuert werden, dass die Differenz der Triggerwerte (OT, UT) abhängig ist vom jeweiligen Wert des Sollwertsignals (i-soll).

2. Verfahren nach Anspruch 1, dadurch gekennzeichnet, dass die Grösse des oberen (OT) und des unteren Triggerwertes (UT) so gesteuert werden, dass die Differenz der Triggerwerte (OT, UT) stets proportional zum Sollwertsignal (i-soll) ist.

## Claims

1. Method for the control of a switch-regulated energy converter (boost converter) with storage capacitor (15), charging diode (14), rectifier (12), charging choke (13) and electronic switch (17) for the precise sinusoidal loading of a feeding a.c. voltage mains (11), the switching transistor (17) being switched in in the manner of a two-position controller on reaching an upper trigger value (OT) and is switched off on dropping below a lower trigger value (UT), the reaching and dropping below of the trigger values (OT, UT) being determined by a continuous comparison of an actual value signal (i-actual) with a desired value signal (i-desired), the actual value signal (i-actual) being constituted by a signal, which is proportional to the current absorbed by the energy converter, whilst the desired value signal (i-desired) is constituted by a signal obtained by rectifying a sinusoidal signal, whereby to the storage capacitor (15) is connected a load (16) from which a measured quantity (i-consumption) is derived, which corresponds to the consumption, characterized in that the desired value signal (i-desired) is obtained by modulating the measured quantity (i-consumption) with the rectified, unsmoothed voltage of the a.c. voltage mains (11) and that the magnitude of the upper (OT) and lower (UT) trigger value is so controlled by the measured quantity (i-consumption) that the difference of the trigger values (OT, UT) is dependent on the value of the desired value signal (i-desired).

2. Method according to claim 1, characterized in that the magnitude of the upper (OT) and lower (UT) trigger value is so controlled that the difference of the trigger values (OT, UT) is always proportional to the desired value signal (i-desired).

## Revendications

1. Procédé de commande pour un convertisseur d'énergie régulé par commutation (boost converter), avec un condensateur (15) de stockage, une diode (14) de chargement, un redresseur (12), un limitateur (13) de charge et un commutateur électronique (17) pour obtenir une charge de forme sinusoïdale aussi précise que possible pour un réseau (11) à tension alternative, dans lequel le commutateur (17) à transistors, sous forme d'un régulateur à deux points, est enclenché chaque fois que l'on atteint une valeur supérieure d'enclenchement (OT), et déclenché chaque fois que l'on atteint une valeur en-dessous d'une valeur inférieure de déclenchement (UT); dans lequel le dépassement vers le haut de la valeur du seuil supérieur (OT) et le dépassement vers le bas de la valeur du seuil inférieur (UT) sont déterminés par la comparaison constante d'un signal de valeur réelle et d'un signal de valeur de consigne; dans lequel un signal qui sert de signal de valeur réelle est proportionnel au courant absorbé par le convertisseur d'énergie; dans lequel un signal qui sert de signal de valeur de consigne est obtenu par le redressement d'un signal de forme sinusoïdale; dans lequel au condensateur (15) de stockage est raccordé un système (16) de consommateur de courant, duquel est déduite une grandeur de mesure (consommation réelle), qui correspond chaque fois à cette consommation; caractérisé en ce que:
    – le signal de la valeur de consigne est obtenu par la modulation de la grandeur de mesure (consommation réelle) avec la tension redressée et non lissée du réseau (11) à tension alternative, et en ce que
    – la grandeur des valeurs des seuils supérieur (OT) et inférieur (UT) est commandée par la grandeur de mesure (consommation réelle, de telle sorte que la différence des seuils de déclenchement (OT, UT) dépend de chaque valeur respective du signal de valeur de consigne.

2. Procédé selon la revendication 1, caractérisé en ce que la grandeur des seuils supérieur (OT) et inférieur (UT) de déclenchement est commandée, de telle sorte que la différence des valeurs de déclenchement (OT, UT) soit constamment proportionnelle au signal de la valeur réelle.

Fig. 1

(a)

(b)

Fig. 2